# EUROPÄISCHE PATENTSCHRIFT

(11) **EP 3 953 156 B1**
(45) Veröffentlichungstag und Bekanntmachung des Hinweises auf die Patenterteilung: **26.07.2023**
(21) Anmeldenummer: 20710097.5
(22) Anmeldetag: 04.03.2020
(51) Int. Cl.: B29C 65/56, B29C 65/00, B29C 65/54, B29C 65/64, B29C 65/50, B29C 65/02, B29C 65/58

(54) **VERFAHREN ZUR HERSTELLUNG EINER VERBINDUNG ZWISCHEN ZWEI BAUTEILEN**
METHOD FOR PRODUCING A CONNECTION BETWEEN TWO COMPONENTS
PROCÉDÉ DE RÉALISATION D'UNE LIAISON ENTRE DEUX COMPOSANTS

(30) Priorität: 12.04.2019 DE 102019205356
(43) Veröffentlichungstag der Anmeldung: 16.02.2022
(73) Patentinhaber: ZF Friedrichshafen AG, 88046 Friedrichshafen (DE)
(72) Erfinder: LOBO CASANOVA, Ignacio, 88677 Markdorf (DE); NAWROTH, Tobias, 68309 Mannheim (DE)
(74) Vertreter: ZF Friedrichshafen AG
(86) Internationale Anmeldenummer: PCT/EP2020/055722
(87) Internationale Veröffentlichungsnummer: WO 2020/207672

(56) Entgegenhaltungen:
- EP-A2- 0 085 410
- EP-A2- 0 085 410
- DE-A1-102017 206 687

## Beschreibung

Die Erfindung betrifft ein Verfahren zur Herstellung einer Verbindung zwischen zwei Bauteilen, von denen ein erstes Bauteil einen Verbindungsabschnitt aufweist und zumindest in diesem aus einem Faser-Kunststoff-Verbund hergestellt wird und ein zweites Bauteil eine zu seiner Oberfläche hin offene Ausnehmung aufweist, in welche in einem Einsetzschritt das erste Bauteil mit seinem Verbindungsabschnitt eingesetzt wird, der anschließend in einem Verbindungsschritt unter Ausbildung eines Hinterschnitts in der Ausnehmung, vorzugsweise plastisch, verformt wird.

Die Kombination verschiedener Werkstoffe und die damit einhergehende Ausnutzung der Stärken der verwendeten Fügepartner in einer aus mehreren miteinander gefügten Bauteilen bestehenden Komponente ist der Grundgedanke von Multi-Material-Verbindungen. Aufgrund von Spannungsspitzen sind insbesondere bei Fahrzeugkomponenten Krafteinleitungselemente zu verwenden, die vorzugsweise aus Metall gefertigt sind. Mittels Multi-Material-Verbindungen ist es weiterhin möglich, verschiedene Funktionen zu integrieren, wie z.B. Gelenkfunktionen bei einem 2-Punkt-Lenker. DE102017206687 A1 und EP0085410 A2 offenbaren alternative Verfahren zum Verbinden zweier Bauteile durch ein Faserverbundteil.

Aufgrund der verschiedenen Materialeigenschaften stellt die Herstellung von Multi-Material-Verbindungen große Herausforderungen an die bisherigen Fügetechniken. Thermische Ausdehnungskoeffizienten, Schmelztemperaturen und Wärmeleitfähigkeiten müssen bereits bei der Konstruktion der Bauteile beachtet werden. Der einfachste Weg eine Verbindung herzustellen, ist mittels nachgelagerter Prozesse, dem sogenannten Post-Mold Assembly (PMA). Nachteilig im Zusammenhang mit einen Faser-Kunststoff-Verbund (FKV) ist z.B. die Schädigung der Faser und somit eine Schwächung des Verbunds. Abhilfe gegen die Schädigung der Fasern wird durch die Herstellung des Verbunds während der Aushärtung des Polymers geschaffen. Dies wird als In-Mould Assembly (IMA) bezeichnet. Dabei werden beispielsweise metallische Einleger umspritzt. Für die Verbindung von Endlos-Faser-Kunststoff-Verbunden (E-FKV) mit einem Metall können verschiedene Fügekonzepte angewandt werden. Beispielsweise erfolgt das Verbinden durch Verschrauben oder Verkleben. Auch ist zum Fügen von FKV-Metall-Strukturen das Einlaminieren eines Inserts bekannt.

Mit den zurzeit genutzten Bau- und Fahrzeugteilen aus Metall sind im Vergleich zu FKV-Strukturen ein höheres Mehrgewicht, niedrigere spezifische Festigkeiten und ggf. eine beschränkte Gestaltungsfreiheit verbunden. Ferner sind mit derzeitigen FKV- oder metallischen Strukturen verlängerte und komplexe Prozessketten verbunden, unter anderem bedingt durch die mechanische Bearbeitung der FKV- oder metallischen Struktur und durch zusätzliche Montageschritte zur Erzielung der Gelenkfunktionen.

Bei Komponenten, die aus einer Kombination von metallischen Bauteilen und Faser-Kunststoff-Verbunden bestehen, treten z.B. die folgenden Probleme auf:
- Unterschiedliche Wärmeausdehnungskoeffizienten der Materialien führen zu Spannungen und Fehlstellen in den Komponenten.
- Geringe Toleranzen in metallischen Bauteilen sind mit hohen Kosten verbunden, sodass die Toleranzen durch den FKV ausgeglichen werden müssen.

Ausgehend hiervor liegt der Erfindung insbesondere die Aufgabe zugrunde, bei einem Verfahren der eingangs genannten Art, Fertigungstoleranzen in der Ausnehmung des zweiten Bauteils mit Hilfe des ersten Bauteils ausgleichen zu können.

Diese Aufgabe wird durch ein Verfahren nach Anspruch 1 gelöst. Bevorzugte Weiterbildungen dieses Verfahrens sind in den Unteransprüchen und in der nachfolgenden Beschreibung gegeben.

Das eingangs genannte Verfahren zur Herstellung einer Verbindung zwischen zwei Bauteilen, von denen ein erstes Bauteil einen Verbindungsabschnitt aufweist und zumindest in diesem aus einem Faser-Kunststoff-Verbund hergestellt wird und ein zweites Bauteil eine zu seiner Oberfläche hin offene Ausnehmung aufweist, in welche in einem Einsetzschritt das erste Bauteil mit seinem Verbindungsabschnitt eingesetzt wird, der anschließend in einem Verbindungsschritt unter Ausbildung eines Hinterschnitts in der Ausnehmung, vorzugsweise plastisch, verformt wird, wird insbesondere dadurch weitergebildet, dass vor dem Einsetzschritt in den Verbindungsabschnitt eine Feder eingebracht und gespannt wird und im Verbindungsschritt die, vorzugsweise plastische, Verformung des Verbindungsabschnitts durch die Federkraft der, insbesondere gespannten, Feder bewirkt wird.

Da die Verformung des Verbindungsabschnitts zur Ausbildung des Hinterschnitts durch die Federkraft der Feder bewirkt wird, können Fertigungstoleranzen in der Ausnehmung des zweiten Bauteils ausgeglichen werden. Insbesondere drängt die Feder das Material des Verbindungsabschnitts gegen eine die Ausnehmung begrenzende Wandung des zweiten Bauteils. Bei der Verbindung zwischen den beiden Bauteilen handelt es sich insbesondere um eine starre Verbindung.

Gemäß einer Weiterbildung ist die Ausnehmung für das Ausbilden des Hinterschnitts geeignet ausgebildet. Beispielsweise erweitert oder öffnet sich die Ausnehmung, insbesondere zumindest bereichsweise, in das zweite Bauteil hinein. Bevorzugt erstreckt sich die Ausnehmung, insbesondere in einer axialen Richtung, in das zweite Bauteil hinein. Vorzugsweise erweitert oder öffnet sich die Ausnehmung, insbesondere dabei, vorteilhaft zumindest bereichsweise, quer zur axialen Richtung und/oder Erstreckungsrichtung, insbesondere in das zweite Bauteil hinein. Bevorzugt wird im Einsetzschritt das erste Bauteil in axialer Richtung mit seinem Verbindungsabschnitt in die Ausnehmung eingesetzt. Vorzugsweise wird im Verbindungsschritt der Verbindungsabschnitt unter Ausbildung des Hinterschnitts quer zur axialen Richtung, vorzugsweise plastisch, verformt. Vorteilhaft wird die Feder quer zur axialen Richtung gespannt. Bevorzugt wirkt die Federkraft der Feder quer zur axialen Richtung. Vorzugsweise wird die Feder in axialer Richtung in den Verbindungsabschnitt eingebracht. Vorteilhaft wird in dem Verbindungsabschnitt stirnseitig eine Aussparung ausgebildet, in welche die Feder eingebracht wird.

Bevorzugt wird im Einsetzschritt das erste Bauteil, insbesondere in axialer Richtung, mit seinem Verbindungsabschnitt zusammen mit der in den Verbindungabschnitt eingebrachten und/oder gespannten Feder in die Ausnehmung eingesetzt. Vorzugsweise wird das erste Bauteil, insbesondere vollständig, aus dem oder einem Faser-Kunststoff-Verbund hergestellt.

Gemäß einer Ausgestaltung wird im Verbindungsschritt die Steifigkeit des Verbindungsabschnitts und/oder des ersten Bauteils vorübergehend herabgesetzt, sodass durch die Federkraft der, insbesondere gespannten, Feder die, vorzugsweise plastische, Verformung des Verbindungsabschnitts bewirkt wird. Durch die vorübergehende Herabsetzung der Steifigkeit des Verbindungsabschnitts und/oder des ersten Bauteils ist es der Feder insbesondere möglich, den Verbindungsabschnitts, vorzugsweise plastisch, zu verformen. Bevorzugt wird im Verbindungsschritt der Verbindungsabschnitt im Bereich der Feder durch die Federkraft der Feder, vorzugsweise quer zur axialen Richtung, gespreizt oder auseinander gespreizt. Insbesondere wird dadurch der Verbindungsabschnitt, vorzugsweise plastisch, verformt. Vorteilhaft wird der Verbindungsabschnitt unter Ausbildung des Hinterschnitts mittels der Feder, vorzugsweise quer zur axialen Richtung, gespreizt oder auseinander gespreizt.

Gemäß einer Weiterbildung weist der Faser-Kunststoff-Verbund Fasern und/oder eine oder wenigstens eine, vorzugsweise die Fasern einbettende, insbesondere duroplastische, Matrix auf. Vorteilhaft wird die Aushärtung des Faser-Kunststoff-Verbunds und/oder der Matrix des Faser-Kunststoff-Verbunds im Verbindungsschritt eingeleitet. Bevorzugt wird der Faser-Kunststoff-Verbund und/oder die Matrix des Faser-Kunststoff-Verbunds im Verbindungsschritt ausgehärtet. Vorzugsweise wird die Steifigkeit des Faser-Kunststoff-Verbunds und/oder der Matrix des Faser-Kunststoff-Verbunds durch das Einleiten des Aushärtens und/oder während des Aushärtens und/oder durch das Aushärten vorübergehend herabgesetzt. Somit ist es insbesondere möglich, dass die Feder die Verformung des Verbindungsabschnitts bewirken kann. Bevorzugt wird als Folge der vorübergehenden Herabsetzung der Steifigkeit des Faser-Kunststoff-Verbunds und/oder der Matrix des Faser-Kunststoff-Verbunds die, vorzugsweise plastische, Verformung des Verbindungsabschnitts durch die Federkraft der, insbesondere gespannten, Feder bewirkt. Vorteilhaft wird durch die vorübergehende Herabsetzung der Steifigkeit des Faser-Kunststoff-Verbunds und/oder der Matrix des Faser-Kunststoff-Verbunds auch die Steifigkeit des Verbindungsabschnitts und/oder des ersten Bauteils vorübergehend herabgesetzt. Bevorzugt wird nach dem Einleiten des Aushärtens des Faser-Kunststoff-Verbunds und/oder der Matrix des Faser-Kunststoff-Verbunds und/oder nach dem, insbesondere plastischen, Verformen des Verbindungsabschnitts der Faser-Kunststoff-Verbund und/oder die Matrix des Faser-Kunststoff-Verbunds, insbesondere vollständig, ausgehärtet, was vorzugsweise im Verbindungsschritt erfolgt. Vorteilhaft ist oder sind nach dem, insbesondere vollständigen, Aushärten des Faser-Kunststoff-Verbunds und/oder der Matrix des Faser-Kunststoff-Verbunds der Verbindungsabschnitt und/oder das erste Bauteil starr. Vorteilhaft bildet das erste Bauteil nach dem, insbesondere vollständigen, Aushärten des Faser-Kunststoff-Verbunds und/oder der Matrix des Faser-Kunststoff-Verbunds, vorzugsweise zusammen mit dem Verbindungsabschnitt, einen starren Körper.

Bevorzugt verliert der Faser-Kunststoff-Verbund während des Aushärtens, insbesondere aufgrund der Synthesereaktion des Materials und dem damit einhergehenden Schrumpfverhalten, an Steifigkeit, wodurch weniger Druck auf die eingebrachte Feder ausgeübt wird. Vorzugsweise wirkt auf die Feder dadurch ein geringerer Druck, wodurch diese sich ausdehnen und über einen Teil ihres Federweges entspannen kann. Vorteilhaft wird durch die Ausdehnung der Feder der um die Feder liegende Faser-Kunststoff-Verbund auseinander gespreizt und der Hinterschnitt in der Ausnehmung erzeugt, der eine Fixierung des Verbindungsabschnitts in der Ausnehmung bewirkt. Die Ausdehnung der Feder ist z.B. abhängig von der auf die Feder wirkenden Vorspannung und/oder von der Federsteifigkeit und/oder von der Steifigkeit des Faser-Kunststoff-Verbunds und/oder von der Ausgestaltung der Feder und/oder von dem Material, aus dem die Feder besteht. Dies ermöglicht insbesondere eine variabel Einstellbarkeit Ausdehnung der Feder.

Bevorzugt liegt der Faser-Kunststoff-Verbund und/oder die Matrix des Faser-Kunststoff-Verbunds vor dem Verbindungsschritt in einem nicht ausgehärteten Zustand vor. Vorzugsweise wird der Verbindungsabschnitt und/oder das erste Bauteil und/oder der Faser-Kunststoff-Verbund und/oder die Matrix des Faser-Kunststoff-Verbunds im Verbindungsschritt erwärmt. Durch das Erwärmen wird insbesondere das Aushärten des Faser-Kunststoff-Verbunds und/oder der Matrix des Faser-Kunststoff-Verbunds eingeleitet und/oder durch das Erwärmen erfolgt insbesondere das, vorzugsweise vollständige, Aushärten des Faser-Kunststoff-Verbunds und/oder der Matrix des Faser-Kunststoff-Verbunds. Vorteilhaft erfolgt das Aushärten des Faser-Kunststoff-Verbunds und/oder der Matrix des Faser-Kunststoff-Verbunds unter Wärmezufuhr und/oder unter Druck. Das Aushärten des Faser-Kunststoff-Verbunds und/oder der Matrix des Faser-Kunststoff-Verbunds erfolgt z.B. in einem Autoklav, einem Umluftofen, einem Presswerkzeug oder mittels einer anderen Vorrichtung zur Temperatur- und/oder Druckbeauschlagung des Faser-Kunststoff-Verbunds.

Bevorzugt bildet das zweite Bauteil einen formstabilen Körper. Insbesondere besteht das zweite Bauteil aus Metall.

Gemäß einer Ausgestaltung wird die Feder derart in den Verbindungsabschnitt eingebracht, dass sie von Fasern des Faser-Kunststoff-Verbunds umgeben ist oder wird. Bevorzugt wird die Feder, insbesondere mittig, in ein, vorzugsweise freies und/oder stirnseitiges, Ende des Verbindungsabschnitts eingebracht.

Gemäß einer Weiterbildung wird der Faser-Kunststoff-Verbund und/oder wird das erste Bauteil zumindest in seinem Verbindungsabschnitt und/oder wird das erste Bauteil, insbesondere vollständig, aus mehreren Faser-Kunststoff-Verbund-Lagen als Laminat hergestellt und/oder zu einem Laminat zusammengesetzt. Bevorzugt wird die Feder, vorzugsweise mittig, zwischen wenigsten zwei der Faser-Kunststoff-Verbund-Lagen angeordnet und insbesondere dadurch in den Verbindungsabschnitt eingebracht. Vorzugsweise werden im Verbindungsschritt die Faser-Kunststoff-Verbund-Lagen, zwischen denen die Feder angeordnet ist, durch die Federkraft der, insbesondere gespannten, Feder, bevorzugt quer zur axialen Richtung, auseinander gespreizt. Vorteilhaft erfolgt die Verformung des Verbindungsabschnitts derart, dass die Faser-Kunststoff-Verbund-Lagen, zwischen denen die Feder angeordnet ist, durch die Federkraft der, insbesondere gespannten, Feder, vorzugsweise quer zur axialen Richtung, auseinander gespreizt werden. Die Faser-Kunststoff-Verbund-Lagen bestehen z.B. aus Prepregs. Bevorzugt bilden die Faser-Kunststoff-Verbund-Lagen zusammen den Verbindungsabschnitt und/oder das erste Bauteil und/oder den Faser-Kunststoff-Verbund.

Beispielsweise werden die wenigsten zwei oder diejenigen Faser-Kunststoff-Verbund-Lagen, zwischen denen die Feder angeordnet ist, länger ausgebildet als die anderen Faser-Kunststoff-Verbund-Lagen, sodass im Verbindungsabschnitt stirnseitig die oder eine Aussparung ausgebildet wird, in welche die Feder eingebracht wird.

Bevorzugt beträgt die Anzahl der Faser-Kunststoff-Verbund-Lagen wenigstens drei, vorzugsweise mehr als drei.

Gemäß einer Ausgestaltung weist jede Faser-Kunststoff-Verbund-Lage Fasern und/oder eine, vorzugsweise die Fasern einbettende, insbesondere duroplastische, Matrix auf. Vorteilhaft wird die Aushärtung der Faser-Kunststoff-Verbund-Lagen und/oder der Matrices der Faser-Kunststoff-Verbund-Lagen im Verbindungsschritt eingeleitet. Bevorzugt werden die Faser-Kunststoff-Verbund-Lagen und/oder die Matrices der Faser-Kunststoff-Verbund-Lagen im Verbindungsschritt ausgehärtet. Vorzugsweise wird die Steifigkeit der Faser-Kunststoff-Verbund-Lagen und/oder der Matrices der Faser-Kunststoff-Verbund-Lagen durch das Einleiten des Aushärtens und/oder während des Aushärtens und/oder durch das Aushärten vorübergehend herabgesetzt. Somit ist es insbesondere möglich, dass die Feder die Verformung des Verbindungsabschnitts bewirken kann. Bevorzugt wird als Folge der vorübergehenden Herabsetzung der Steifigkeit der Faser-Kunststoff-Verbund-Lagen und/oder der Matrices der Faser-Kunststoff-Verbund-Lagen die, vorzugsweise plastische, Verformung des Verbindungsabschnitts durch die Federkraft der, insbesondere gespannten, Feder bewirkt. Vorteilhaft wird durch die vorübergehende Herabsetzung der Steifigkeit der Faser-Kunststoff-Verbund-Lagen und/oder der Matrices der Faser-Kunststoff-Verbund-Lagen auch die Steifigkeit des Faser-Kunststoff-Verbunds und/oder des Verbindungsabschnitts und/oder des ersten Bauteils vorübergehend herabgesetzt. Bevorzugt werden nach dem Einleiten des Aushärtens der Faser-Kunststoff-Verbund-Lagen und/oder der Matrices der Faser-Kunststoff-Verbund-Lagen und/oder nach dem, insbesondere plastischen, Verformen des Verbindungsabschnitts die Faser-Kunststoff-Verbund-Lagen und/oder die Matrices der Faser-Kunststoff-Verbund-Lagen, insbesondere vollständig, ausgehärtet, was vorzugsweise im Verbindungsschritt erfolgt. Vorteilhaft ist oder sind nach dem, insbesondere vollständigen, Aushärten der Faser-Kunststoff-Verbund-Lagen und/oder der Matrices der Faser-Kunststoff-Verbund-Lagen der Verbindungsabschnitt und/oder das erste Bauteil und/oder der der Faser-Kunststoff-Verbund starr. Vorteilhaft bildet das erste Bauteil nach dem, insbesondere vollständigen, Aushärten der Faser-Kunststoff-Verbund-Lagen und/oder der Matrices der Faser-Kunststoff-Verbund-Lagen, vorzugsweise zusammen mit dem Verbindungsabschnitt, einen starren Körper. Die Faser-Kunststoff-Verbund-Lagen weisen insbesondere die gleiche Matrix und/oder die gleichen Fasern auf. Bevorzugt bilden die Matrices der Faser-Kunststoff-Verbund-Lagen zusammen die Matrix des ersten Bauteils und/oder des Verbindungsabschnitts und/oder des Faser-Kunststoff-Verbunds und/oder des Laminats.

Bevorzugt werden, insbesondere vor dem Einsetzschritt, die Faser-Kunststoff-Verbund-Lagen, vorzugsweise quer zur axialen Richtung, flächig aufeinander gelegt. Vorzugsweise wird dabei die Feder zwischen wenigstens zwei der Faser-Kunststoff-Verbund-Lagen oder zwischen den wenigsten zwei Faser-Kunststoff-Verbund-Lagen angeordnet. Dadurch wie die Feder insbesondere in den Verbindungsabschnitt eingebracht.

Gemäß einer Ausgestaltung wird, insbesondere vor dem Einsetzschritt, der Faser-Kunststoff-Verbund und/oder das erste Bauteil zumindest in seinem Verbindungsabschnitt und/oder das erste Bauteil, insbesondere vollständig, aus mehreren flächig aufeinander gelegten trockenen oder vorimprägniertes Faserlagen hergestellt und/oder zusammengesetzt. Bevorzugt wird die Feder, vorzugsweise mittig, zwischen wenigsten zwei der Faserlagen angeordnet und insbesondere dadurch in den Verbindungsabschnitt eingebracht. Vorzugsweise wird anschließend, insbesondere im Verbindungsschritt, die oder eine, vorzugsweise duroplastische, Matrix in die Faserlagen und/oder in die durch die Faserlagern gebildete Faserlagenanordnung injiziert. Das Herstellen des Verbindungsabschnitts und/oder des ersten Bauteils und/oder des Faser-Kunststoff-Verbund erfolgt beispielsweise durch das Harzinjektionsverfahren (Resin Transfer Moulding), welches z.B. auch mit dem Ausdruck RTM abgekürzt wird. Vorzugsweise werden im Verbindungsschritt die Faserlagen, zwischen denen die Feder angeordnet ist, durch die Federkraft der, insbesondere gespannten Feder, bevorzugt quer zur axialen Richtung, auseinander gespreizt. Vorteilhaft erfolgt die Verformung des Verbindungsabschnitts derart, dass die Faserlagen, zwischen denen die Feder angeordnet ist, durch die Federkraft der, insbesondere gespannten, Feder, vorzugsweise quer zur axialen Richtung, auseinander gespreizt werden. Bevorzugt bilden die Faserlagen, insbesondere nach der Injektion, die Faser-Kunststoff-Verbund-Lagen. Vorteilhaft bilden die Faserlagen, insbesondere nach der Injektion und/oder nach dem Aushärten, das Laminat. Die vorimprägnierten Faserlagen sind z.B. mit Harz vorimprägniert. Beispielsweise bestehen die vorimprägnierten Faserlagen aus Prepregs.

Vorteilhaft werden die wenigsten zwei oder diejenigen Faserlagen, zwischen denen die Feder angeordnet ist, länger ausgebildet als die anderen Faserlagen, sodass im Verbindungsabschnitt stirnseitig die oder eine Aussparung ausgebildet wird, in welche die Feder eingebracht wird. Bevorzugt beträgt die Anzahl der Faserlagen wenigstens drei, vorzugsweise mehr als drei.

Gemäß einer Weiterbildung werden die Faser-Kunststoff-Verbund-Lagen und/oder die Faserlagen im Bereich der Feder vor dem Einsetzen durch ein Klemmmittel zusammengehalten und/oder zusammengedrückt. Das Klemmmittel ist z.B. ein Clip oder Zange. Hierdurch kann insbesondere eine Beschädigung des Laminats im Einsetzschritt vermieden werden.

Gemäß einer Ausgestaltung werden die beiden Bauteile im Verbindungsabschnitt zusätzlich stoffschlüssig miteinander verbunden, insbesondere miteinander verklebt. Bevorzugt wird vor dem Einsetzschritt ein Klebstoff auf die Oberfläche des Verbindungsabschnitts aufgebracht und/oder in die Ausnehmung eingebracht, sodass die beiden Bauteile, insbesondere im Einsetzschritt und/oder Verbindungsabschnitt, zusätzlich miteinander verklebt werden.

Bei den Fasern des Faser-Kunststoff-Verbunds und/oder jeder Faser-Kunststoff-Verbund-Lage und/oder jeder Faserlage handelt es sich z.B. um Kohlenstofffasern oder um Glasfasern. Bevorzugt sind die Fasern des Faser-Kunststoff-Verbunds und/oder jeder Faser-Kunststoff-Verbund-Lage und/oder jeder Faserlage Endlosfasern. Vorzugsweise bildet der Faser-Kunststoff-Verbund einen Endlosfaser-Kunststoff-Verbund. Vorteilhaft bildet jede Faser-Kunststoff-Verbund-Lage eine Endlosfaser-Kunststoff-Verbund-Lage. Bevorzugt bildet jeder Faserlage eine Endlosfaserlage.

Die Feder besteht beispielsweise aus Metall oder aus Kunststoff oder aus einem Elastomer, wie z.B. Gummi. Bevorzugt ist die Feder als Druckfeder ausgeführt. Beispielsweise ist die Feder eine Schraubenfeder. Die Windungsanzahl der Feder und/oder die Steigung der Windungen und/oder der Durchmesser der Feder und/oder der Durchmesser des Federdrahts sind dabei insbesondere variabel an die jeweiligen Anforderungen anpassbar. Insbesondere ist die Querschnittsform des Federdrahts rund ausgeführt. Alternativ kann die Querschnittsform des Federdrahts aber auch quadratisch, rechteckig oder anderes ausgebildet sein. Insbesondere ist die Feder als Flachfeder und/oder als Lamelle ausgeführt.

Gemäß einer Weiterbildung verjüngt sich die Ausnehmung, vorzugsweise axial, insbesondere zumindest bereichsweise, in Richtung ihrer an der Oberfläche des zweiten Bauteils vorgesehenen Öffnung. Bevorzugt ist die Ausnehmung, insbesondere zumindest bereichsweise, vorzugsweise in axialer Richtung, keilförmig oder konisch ausgebildet.

Gemäß einer Ausgestaltung ist in dem zweiten Bauteil eine Lageraufnahme vorgesehen, in die, vorzugsweise in oder nach dem Verbindungsschritt, ein Gelenk oder Gummilager eingesetzt wird. Bevorzugt bilden die beiden miteinander verbundenen Bauteile eine Fahrwerkkomponente oder einen Teil einer Fahrwerkkomponente eines Fahrzeugs. Vorzugsweise wird die Fahrwerkkomponente insbesondere, mittels des Gelenks oder Gummilagers, mit einem Fahrzeugbauteil, wie z.B. mit einer anderen Fahrwerkkomponente oder mit einem Fahrzeugaufbau oder Hilfsrahmen verbunden.

Die Erfindung wird nachfolgend anhand einer bevorzugten Ausführungsform unter Bezugnahme auf die Zeichnung beschrieben. In der Zeichnung zeigen:
- Fig. 1: eine schematische Seitenansicht eines Zweipunkt-Lenkers mit zwei nach dem erfindungsgemäßen Verfahren gemäß einer Ausführungsform hergestellten Verbindungen,
- Fig. 2: eine schematische Ansicht einer aus Fig. 1 ersichtlichen Feder,
- Fig. 3: einen Ablauf zur Herstellung einer aus Fig. 1 ersichtlichen Verbindungsstrebe des Zweipunkt-Lenkers,
- Fig. 4: einen Einsetzschritt, in dem die Verbindungsstrebe in eine Ausnehmung eines aus Fig. 1 ersichtlichen Krafteinleitungselements des Zweipunkt-Lenkers eingesetzt wird, und
- Fig. 5: einen Verbindungsschritt, in dem die in die Ausnehmung des Krafteinleitungselements eingesetzte Verbindungsstrebe mit dem Krafteinleitungselement verbunden wird.

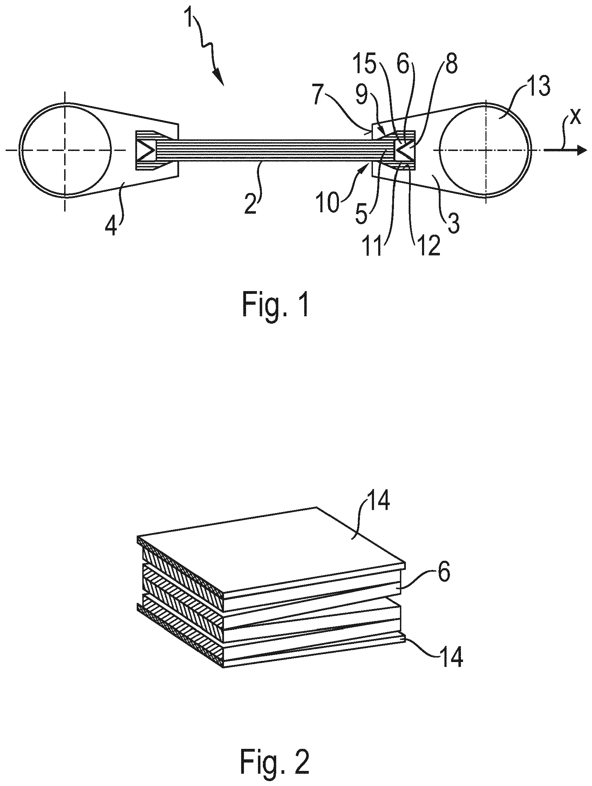

Aus Fig. 1 ist eine schematische Seitenansicht eines Zweipunkt-Lenkers 1 mit einer Verbindungsstrebe 2 aus einem Faser-Kunststoff-Verbund und zwei metallischen Krafteinleitungselementen 3 und 4 ersichtlich, die jeweils starr mit der Verbindungsstrebe 2 verbunden sind. Die beiden Krafteinleitungselementen 3 und 4 sind gleichartig ausgebildet. Ferner sind die beiden starren Verbindungen gleichartig ausgeführt, sodass nachfolgend lediglich auf die Verbindung zwischen der Verbindungsstrebe 2 und dem Krafteinleitungselement 3 eingegangen wird.

Die Verbindungsstrebe 2 bildet ein erstes Bauteil, welches einen Verbindungsabschnitt 5 aufweist, in dessen dem Krafteinleitungselement 3 zugewandten, stimseitigen Ende eine Feder 6 eingebracht ist. Ferner bildet das Krafteinleitungselement 3 ein zweites Bauteil, welches eine zu seiner Oberfläche 7 hin offene und sich in dieses in einer axialen Richtung x hinein erstreckende Ausnehmung 8 aufweist, in welche das erste Bauteil 2 mit seinem Verbindungsabschnitt 5 eingesetzt ist. Die Ausnehmung 8 verjüngt sich in einem Befestigungsbereich 9 in Richtung ihrer an der Oberfläche 7 des zweiten Bauteils 3 vorgesehenen Öffnung 10. Insbesondere ist die Ausnehmung 8 in ihrem Befestigungsbereich 9 keilförmig ausgebildet. Der Verbindungsabschnitt 5 des ersten Bauteils 2 ist innerhalb der Ausnehmung 8 quer zur axialen Richtung x gespreizt, sodass ein Hinterschnitt 11 ausgebildet ist, mittels welchem das erste Bauteil 2 formschlüssig mit dem zweiten Bauteil 3 verbunden ist. Ferner ist das zweite Bauteil 2 mit seinem Verbindungsabschnitt 5 innerhalb der Ausnehmung 8 quer zur axialen Richtung x an eine die Ausnehmung 8 begrenzende Wandung 12 des zweiten Bauteils 3 angelegt und mit dieser verklebt. Das zweite Bauteil 3 weist eine, vorzugsweise ein Lagerauge bildende, zylindrische Lageraufnahme 13 auf, in die insbesondere ein Gelenk oder Gummilager eingesetzt wird.

Das erste Bauteil 2 ist als Laminat aus mehreren flächig aufeinander liegenden und fest miteinander verbundenen Faser-Kunststoff-Verbund-Lagen 14 ausgebildet und weist im Verbindungsabschnitt 5 stirnseitig eine Aussparung 15 auf, in welche die Feder 6 eingebracht ist. Die Feder 6 ist dabei zwischen wenigstens zwei oder mehreren der Faser-Kunststoff-Verbund-Lagen 14 im Verbindungsabschnitt 5 angeordnet, was aus Fig. 2 ersichtlich ist. Die Faser-Kunststoff-Verbund-Lagen 14, zwischen denen die Feder 6 angeordnet ist, sind gleich lang. Ferner sind die anderen Faser-Kunststoff-Verbund-Lagen, die stirnseitig an die Aussparung 15 grenzen, gleich lang, aber kürzer als die Faser-Kunststoff-Verbund-Lagen, zwischen denen die Feder 6 angeordnet ist.

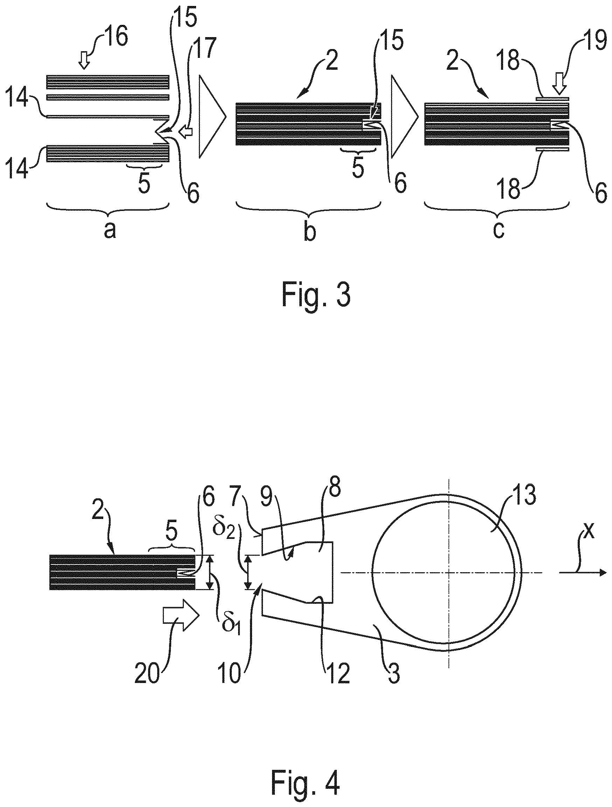

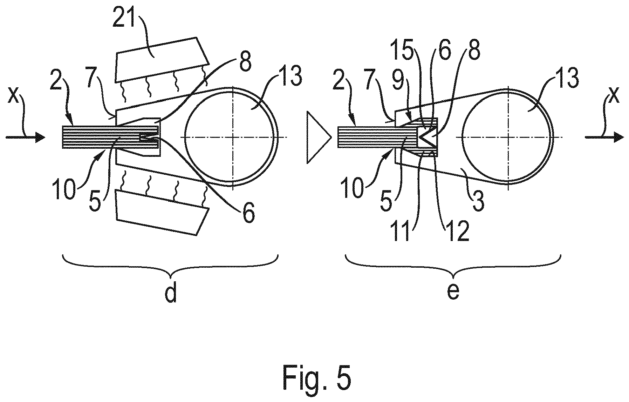

Nachfolgend werden unter Bezugnahme auf Fig. 3 die Herstellung des ersten Bauteils 2 und unter Bezugnahme auf die Fig. 4 und 5 das Ausbilden der Verbindung zwischen den beiden Bauteilen 2 und 3 beschrieben.

Zur Herstellung des ersten Bauteils 2 werden gemäß Fig. 3, Abschnitt a mehrere Faser-Kunststoff-Verbund-Lagen 14, vorzugswiese in Form von Prepregs, unter Ausbildung der Aussparung 15 im Verbindungsabschnitt 5 flächig aufeinander gelegt. Ferner wird die Feder 6 gespannt und im gespannten Zustand in die Aussparung 15 eingebracht. Der Pfeil 16 verdeutlicht dabei die Stapelrichtung der Faser-Kunststoff-Verbund-Lagen 14. Ferner repräsentiert der Pfeil 17 insbesondere das Einbringen der gespannten Feder 6 in die Aussparung 15. Alternativ kann z.B. die ungespannte Feder an dem für die Aussparung 15 vorgesehen Ort angeordnet und durch das Stapeln der Faser-Kunststoff-Verbund-Lagen 14 gespannt werden. Bevorzugt werden die Faser-Kunststoff-Verbund-Lagen 14 beim Stapeln zusammengedrückt. Die Matrices der Faser-Kunststoff-Verbund-Lagen 14 sind dabei noch nicht ausgehärtet.

In Fig. 3, Abschnitt b ist das gemäß Fig. 3, Abschnitt a hergestellte erste Bauteil 2 dargestellt, wobei die Matrices der Faser-Kunststoff-Verbund-Lagen 14 im nicht ausgehärteten Zustand vorliegen. Vorzugsweise kleben die Faser-Kunststoff-Verbund-Lagen 14 aufgrund der Klebrigkeit ihrer nicht ausgehärteten Matrices zusammen, sodass das erste Bauteil 2 zusammenhält. Ferner ist die Steifigkeit der Faser-Kunststoff-Verbund-Lagen 14 im nicht ausgehärteten Zustand ihrer Matrices derart hoch, dass die gespannte Feder 6 die Faser-Kunststoff-Verbund-Lagen 14, zwischen denen sie angeordnet ist, nicht auseinander spreizen kann.

Nachfolgend wird gemäß Fig. 3, Abschnitt c das erste Bauteil 2 im Verbindungsabschnitt 5 oberflächlich mit einem Klebstofffilm 18 versehen. Das Aufbringen des Klebstofffilms 18 auf die Oberfläche des Bauteils 2 wird insbesondere durch den Pfeil 19 verdeutlicht. Dabei liegen die Matrices der Faser-Kunststoff-Verbund-Lagen 14 im nicht ausgehärteten Zustand vor.

Anschließend wird in einem Einsetzschritt das erste Bauteil 2 im seinem Verbindungsabschnitt 5 in axialer Richtung x in die Ausnehmung 8 des zweiten Bauteils 3 eingesetzt, was aus Fig. 4 ersichtlich ist. Die Größe oder lichte Weite δ2 der Öffnung 10 ist dabei insbesondere größer als die, vorzugsweise größte, Dicke δ1 des ersten Bauteils 2. Das Einsetzen des Verbindungsabschnitts 5 des zweiten Bauteils 2 in die Ausnehmung des zweiten Bauteils 3 wird insbesondere durch den Pfeil 20 verdeutlicht. Dabei liegen die Matrices der Faser-Kunststoff-Verbund-Lagen 14 im nicht ausgehärteten Zustand vor.

Gemäß Fig. 5, Abschnitt d ist das erste Bauteil 2 im seinem Verbindungsabschnitt 5 in die Ausnehmung 8 des zweiten Bauteils 3 eingesetzt. Ferner wird die so gebildete Anordnung in einem Verbindungsschritt mittels einer Wärmequelle 21 erwärmt, sodass auch die Matrices der Faser-Kunststoff-Verbund-Lagen 14 erwärmt und dadurch ausgehärtet werden. Während der Aushärtung wird die Steifigkeit der Matrices der Faser-Kunststoff-Verbund-Lagen vorübergehend herabgesetzt, sodass die Feder 6 aufgrund ihrer Federkraft die Faser-Kunststoff-Verbund-Lagen 14, zwischen denen sie angeordnet ist, auseinander spreizt und somit den Hinterschnitt 11 im Befestigungsbereich 9 erzeugt. Ferner werden die auseinander gespreizten Faser-Kunststoff-Verbund-Lagen 14 mit dem Klebstofffilm 18 gegen die Wandung 12 der Ausnehmung 8 gedrückt, sodass die beiden Bauteile 2 und 3 im Verbindungsabschnitt 5 miteinander verklebt werden. Im ausgehärteten Zustand der Matrices der Faser-Kunststoff-Verbund-Lagen, der aus Fig. 5, Abschnitt e ersichtlich ist, sind die beiden Bauteil 2 und 3 durch den Hinterschnitt 11 formschlüssig und durch die Verklebung zusätzlich stoffschlüssig miteinander verbunden.

Bevorzugt werden die Faser-Kunststoff-Verbund-Lagen, insbesondere während des Aushärtens, durch ihre Matrices stoffschlüssig miteinander verbunden. Die Matrices der Faser-Kunststoff-Verbund-Lagen werden zusammenfassend insbesondere auch als Matrix des ersten Bauteils 2 und/oder des Faser-Kunststoff-Verbunds bezeichnet.

Das Krafteinleitungselement 4 wird auf die gleiche Weise wie das Krafteinleitungselement 3 mit der Verbindungsstrebe 2 verbunden. Vorzugsweise werden die beiden Krafteinleitungselemente 3 und 4 gleichzeitig mit der Verbindungsstrebe 2 verbunden.

### Bezugszeichen

- 1: Zweipunkt-Lenker
- 2: Verbindungsstrebe / erstes Bauteil
- 3: Krafteinleitungselement / zweites Bauteil
- 4: Krafteinleitungselement
- 5: Verbindungsabschnitt des ersten Bauteils
- 6: Feder
- 7: Oberfläche des zweiten Bauteils
- 8: Ausnehmung im zweiten Bauteil
- 9: Befestigungsbereich
- 10: Öffnung der Ausnehmung
- 11: Hinterschnitt
- 12: Wandung der Ausnehmung
- 13: Lageraufnahme
- 14: Faser-Kunststoff-Verbund-Lage
- 15: Aussparung im Verbindungsabschnitt
- 16: Stapelrichtung
- 17: Einbringen der Feder
- 18: Klebstofffilm
- 19: Aufbringen des Klebstofffilms
- 20: Einsetzen des Verbindungsabschnitts in die Ausnehmung
- 21: Wärmequelle

- δ1: Dicke des ersten Bauteils
- δ2: lichte Weite der Öffnung
- x: axiale Richtung

## Patentansprüche

1. Verfahren zur Herstellung einer Verbindung zwischen zwei Bauteilen (2, 3), von denen ein erstes Bauteil (2) einen Verbindungsabschnitt (5) aufweist und zumindest in diesem aus einem Faser-Kunststoff-Verbund hergestellt wird und ein zweites Bauteil (3) eine zu seiner Oberfläche (7) hin offene Ausnehmung (8) aufweist, in welche in einem Einsetzschritt das erste Bauteil (2) mit seinem Verbindungsabschnitt (5) eingesetzt wird, der anschließend in einem Verbindungsschritt unter Ausbildung eines Hinterschnitts (11) in der Ausnehmung (8) verformt wird, **dadurch gekennzeichnet, dass** vor dem Einsetzschritt in den Verbindungsabschnitt (5) eine Feder (6) eingebracht und gespannt wird und im Verbindungsschritt die Verformung des Verbindungsabschnitts (5) durch die Federkraft der Feder (6) bewirkt wird.

2. Verfahren nach Anspruch 1, **dadurch gekennzeichnet, dass** die Ausnehmung (8) sich in einer axialen Richtung (x) in das zweite Bauteil (3) hinein erstreckt und sich dabei zumindest bereichsweise quer zur axialen Richtung (x) erweitert, im Einsetzschritt das erste Bauteil (2) in axialer Richtung (x) mit seinem Verbindungsabschnitt (5) in die Ausnehmung (8) eingesetzt wird und im Verbindungsschritt der Verbindungsabschnitt (5) unter Ausbildung des Hinterschnitts (11) quer zur axialen Richtung (x) verformt wird.

3. Verfahren nach Anspruch 1 oder 2, **dadurch gekennzeichnet, dass** im Einsetzschritt das erste Bauteil (2) mit seinem Verbindungsabschnitt (5) zusammen mit der in den Verbindungabschnitt (5) eingebrachten und gespannten Feder (6) in die Ausnehmung (8) eingesetzt wird.

4. Verfahren nach einem der vorangehenden Ansprüche, **dadurch gekennzeichnet, dass** im Verbindungsschritt die Steifigkeit des Verbindungsabschnitts (5) vorübergehend herabgesetzt wird, sodass die Federkraft der Feder die Verformung des Verbindungsabschnitts bewirkt.

5. Verfahren nach einem der vorangehenden Ansprüche, **dadurch gekennzeichnet, dass** der Faser-Kunststoff-Verbund eine duroplastische Matrix aufweist, die im Verbindungsschritt ausgehärtet wird, wodurch die Steifigkeit der Matrix vorübergehend herabgesetzt wird, sodass die Federkraft der Feder die Verformung des Verbindungsabschnitts bewirkt.

6. Verfahren nach einem der vorangehenden Ansprüche, **dadurch gekennzeichnet, dass** das zweite Bauteil (3) aus Metall besteht.

7. Verfahren nach einem der vorangehenden Ansprüche, **dadurch gekennzeichnet, dass** die Feder (6) derart in den Verbindungsabschnitt (5) eingebracht wird, dass sie von Fasern des Faser-Kunststoff-Verbunds umgeben ist.

8. Verfahren nach einem der vorangehenden Ansprüche, **dadurch gekennzeichnet, dass** der Faser-Kunststoff-Verbund aus mehreren Faser-Kunststoff-Verbund-Lagen (14) zu einem Laminat zusammengesetzt wird, wobei die Feder (6) zwischen wenigsten zwei der Faser-Kunststoff-Verbund-Lagen (14) angeordnet wird.

9. Verfahren nach Anspruch 8 **dadurch gekennzeichnet, dass** die Verformung des Verbindungsabschnitts derart erfolgt, dass die Faser-Kunststoff-Verbund-Lagen, zwischen denen die Feder (6) angeordnet ist, durch die Federkraft der Feder (6) auseinander gespreizt werden.

10. Verfahren nach Anspruch 8 oder 9, **dadurch gekennzeichnet, dass** jede Faser-Kunststoff-Verbund-Lage (14) eine duroplastische, Matrix aufweist, wobei die Matrices der Faser-Kunststoff-Verbund-Lagen im Verbindungsschritt ausgehärtet werden, wodurch die Steifigkeit der Matrices vorübergehend herabgesetzt wird, sodass die Federkraft der Feder die Verformung des Verbindungsabschnitts bewirkt.

11. Verfahren nach einem der vorangehenden Ansprüche, **dadurch gekennzeichnet, dass** der Faser-Kunststoff-Verbund aus mehreren flächig aufeinander gelegten trockenen oder vorimprägniertes Faserlagen zusammengesetzt wird, wobei die Feder (6) zwischen wenigsten zwei der Faserlagen angeordnet wird und anschließend die oder eine duroplastische Matrix in die durch die Faserlagern gebildete Faserlagenanordnung injiziert wird.

12. Verfahren nach einem der vorangehenden Ansprüche, **dadurch gekennzeichnet, dass** die beiden Bauteile (2, 3) im Verbindungsabschnitt (5) zusätzlich miteinander verklebt werden.

13. Verfahren nach einem der vorangehenden Ansprüche, **dadurch gekennzeichnet, dass** die Fasern des Faser-Kunststoff-Verbunds Endlosfasern sind.

14. Verfahren nach einem der vorangehenden Ansprüche, **dadurch gekennzeichnet, dass** die Ausnehmung (8) sich zumindest bereichsweise in Richtung ihrer an der Oberfläche (7) des zweiten Bauteils (3) vorgesehenen Öffnung (10) verjüngt.

15. Verfahren nach einem der vorangehenden Ansprüche, **dadurch gekennzeichnet, dass** in dem zweiten Bauteil (3) eine Lageraufnahme (13) vorgesehen ist, in die ein Gelenk oder Gummilager eingesetzt wird.

## Claims

1. Method for producing a connection between two components (2, 3), of which a first component (2) has a connecting portion (5) and is produced, at least in said connecting portion, from a fibre-plastics composite and a second component (3) has an aperture (8) which is open toward its surface (7) and into which, in an insertion step, the connecting portion (5) of the first component (2) is inserted, said connecting portion subsequently being deformed in a connection step so as to form an undercut (11) in the aperture (8), **characterized in that**, prior to the insertion step, a spring (6) is introduced into the connecting portion (5) and tensioned, and, in the connection step, the connecting portion (5) is deformed by the spring force of the spring (6).

2. Method according to Claim 1, **characterized in that** the aperture (8) extends in an axial direction (x) into the second component (3) and widens at least in certain regions transversely with respect to the axial direction (x), in the insertion step the connecting portion (5) of the first component (2) is inserted in the axial direction (x) into the aperture (8), and in the connection step the connecting portion (5) is deformed so as to form the undercut (11) transversely with respect to the axial direction (x).

3. Method according to Claim 1 or 2, **characterized in that**, in the insertion step, the connecting portion (5) of the first component (2) is inserted, together with the tensioned spring (6) introduced into the connecting portion (5), into the aperture (8).

4. Method according to one of the preceding claims, **characterized in that**, in the connection step, the stiffness of the connecting portion (5) is temporarily reduced, with the result that the spring force of the spring deforms the connecting portion.

5. Method according to one of the preceding claims, **characterized in that** the fibre-plastics composite comprises a thermoset matrix which is cured in the connection step, as a result of which the stiffness of the matrix is temporarily reduced, with the result that the spring force of the spring deforms the connecting portion.

6. Method according to one of the preceding claims, **characterized in that** the second component (3) consists of metal.

7. Method according to one of the preceding claims, **characterized in that** the spring (6) is introduced into the connecting portion (5) in such a way that it is surrounded by fibres of the fibre-plastics composite.

8. Method according to one of the preceding claims, **characterized in that** the fibre-plastics composite is composed of a plurality of fibre-plastics composite layers (14) to form a laminate, wherein the spring (6) is arranged between at least two of the fibre-plastics composite layers (14).

9. Method according to Claim 8, **characterized in that** the connecting portion is deformed in such a way that the fibre-plastics composite layers between which the spring (6) is arranged are spread apart by the spring force of the spring (6).

10. Method according to Claim 8 or 9, **characterized in that** each fibre-plastics composite layer (14) comprises a thermoset matrix, wherein the matrices of the fibre-plastics composite layers are cured in the connection step, as a result of which the stiffness of the matrices is temporarily reduced, with the result that the spring force of the spring deforms the connecting portion.

11. Method according to one of the preceding claims, **characterized in that** the fibre-plastics composite is composed of a plurality of dry or pre-impregnated fibre layers which are placed areally one on top of the other, wherein the spring (6) is arranged between at least two of the fibre layers and the or a thermoset matrix is subsequently injected into the fibre layer arrangement formed by the fibre layers.

12. Method according to one of the preceding claims, **characterized in that** the two components (2, 3) are additionally adhesively bonded to one another in the connecting portion (5).

13. Method according to one of the preceding claims, **characterized in that** the fibres of the fibre-plastics composite are endless fibres.

14. Method according to one of the preceding claims, **characterized in that** the aperture (8) tapers at least in certain regions in the direction of its opening (10) provided on the surface (7) of the second component (3).

15. Method according to one of the preceding claims, **characterized in that** a bearing receptacle (13) is provided in the second component (3), a joint or rubber bearing being inserted into said bearing receptacle.

## Revendications

1. Procédé de réalisation d'une liaison entre deux composants (2, 3) dont un premier composant (2) comporte une portion de liaison (5) et est réalisé au moins dans celle-ci à partir d'un composite fibre-matière synthétique et dont un deuxième composant (3) comporte un évidement (8) qui est ouvert en direction de sa surface (7) et dans lequel le premier composant (2) est inséré lors d'une étape d'insertion avec sa portion de liaison (5) qui est ensuite déformée dans une étape de liaison en formant une contre-dépouille (11) dans l'évidement (8), **caractérisé en ce que**, avant l'étape d'insertion, un ressort (6) est introduit et tendu dans la portion de liaison (5) et, dans l'étape de liaison, la déformation de la portion de liaison (5) est provoquée par la force élastique du ressort (6).

2. Procédé selon la revendication 1, **caractérisé en ce que** l'évidement (8) s'étend jusque dans le deuxième composant (3) dans une direction axiale (x) et s'élargit ainsi au moins par zones transversalement à la direction axiale (x), le premier composant (2) est inséré, dans l'étape d'insertion, avec sa portion (5) dans l'évidement (8) dans la direction axiale (x) et la portion de liaison (5) est déformée, dans l'étape de liaison, en formant la contre-dépouille (11) transversalement à la direction axiale (x).

3. Procédé selon la revendication 1 ou 2, **caractérisé en ce que**, dans l'étape d'insertion, le premier composant (2) est inséré avec sa portion de liaison (5) dans l'évidement (8) conjointement avec le ressort (6) introduit et tendu dans la portion de liaison (5).

4. Procédé selon l'une des revendications précédentes, **caractérisé en ce que**, dans l'étape de liaison, la rigidité de la portion de liaison (5) est temporairement réduite de sorte que la force élastique du ressort provoque la déformation de la portion de liaison.

5. Procédé selon l'une des revendications précédentes, **caractérisé en ce que** le composite fibre-matière synthétique comporte une matrice thermodurcissable qui est durcie dans l'étape de liaison, ce qui réduit temporairement la rigidité de la matrice de sorte que la force élastique du ressort provoque la déformation de la portion de liaison.

6. Procédé selon l'une des revendications précédentes, **caractérisé en ce que** le deuxième composant (3) est en métal.

7. Procédé selon l'une des revendications précédentes, **caractérisé en ce que** le ressort (6) est introduit dans la portion de liaison (5) de manière à être entouré de fibres du composite fibres-matière synthétique.

8. Procédé selon l'une des revendications précédentes, **caractérisé en ce que** le composite fibres-matière synthétique est composé de plusieurs couches de composite fibres-matière synthétique (14) pour former un stratifié, le ressort (6) étant disposé entre au moins deux des couches de composite fibre-matière synthétique (14).

9. Procédé selon la revendication 8, **caractérisé en ce que** la déformation de la portion de liaison est effectuée de manière que les couches de composite fibre-matière synthétique, entre lesquelles le ressort (6) est disposé, sont écartées par la force élastique du ressort (6).

10. Procédé selon la revendication 8 ou 9, **caractérisé en ce que** chaque couche de composite fibre-matière synthétique (14) comporte une matrice thermodurcissable, les matrices des couches de composite fibre-matière synthétique étant durcies dans l'étape de liaison, ce qui abaisse temporairement la rigidité des matrices de sorte que la force élastique du ressort provoque la déformation de la portion de liaison.

11. Procédé selon l'une des revendications précédentes, **caractérisé en ce que** le composite fibres-matière synthétique est composé de plusieurs couches de fibres sèches ou pré-imprégnées posées à plat les unes sur les autres, le ressort (6) étant disposé entre au moins deux des couches de fibres puis la ou une matrice thermodurcissable étant injectée dans l'ensemble de couches de fibres formé par les couches de fibres.

12. Procédé selon l'une des revendications précédentes, **caractérisé en ce que** les deux composants (2, 3) sont en outre collés ensemble dans la portion de liaison (5).

13. Procédé selon l'une des revendications précédentes, **caractérisé en ce que** les fibres du composite fibres-matière synthétique sont des fibres sans fin.

14. Procédé selon l'une des revendications précédentes, **caractérisé en ce que** l'évidement (8) se rétrécit au moins par zones en direction de son ouverture (10) ménagée au niveau de la surface (7) du deuxième composant (3).

15. Procédé selon l'une des revendications précédentes, **caractérisé en ce que**, dans le deuxième composant (3), un siège de palier (13) est prévu dans lequel une articulation ou un palier en caoutchouc est inséré(e) .
